# DEMANDE DE BREVET EUROPEEN

(11) **EP 1 580 624 A2**
(43) Date de publication de la demande: **28.09.2005**
(21) Numéro de dépôt: 05004283.7
(22) Date de dépôt: 28.02.2005
(51) Int. Cl.: G04B 13/02

(54) **Mobile destiné à venir en contact avec un autre élément mobile ou fixe**

(30) Priorité: 25.03.2004 CH 5022004
(71) Demandeur: Pierre Kunz SA, 1294 Genthod (CH)
(72) Inventeur: Kunz, Pierre, 01170 Echenevez (FR)
(74) Mandataire: Dietlin, Henri

(57) **Abrégé**

Le mobile comprend un moyeu (1) tournant sur son axe et une jante de transmission ou de roulement (3) destiné à venir en contact avec un élément mobile ou fixe, le moyeu (1) et la jante de transmission ou de roulement (3) étant reliés par des lames (2) agencées pour permettre un déplacement relatif de la jante de transmission ou de roulement (3) par rapport au moyeu (1) sous l'action ressort des lames (2)

## Description

L'invention a pour objet un mobile destiné à venir en contact avec un autre élément mobile ou fixe.

En horlogerie, par exemple, lors de l'ajout sur un mécanisme existant d'un mobile additionnel, il arrive souvent que l'axe d'un mobile doive passer à travers toute la platine pour afficher, par exemple, une indication sur le cadran. De ce fait, l'axe du mobile peut rencontrer un ou plusieurs composants existants du mouvement. Il survient alors de nombreuses complications si l'on doit changer l'emplacement de l'axe de pivotement du mobile traversant toute la platine. Ce problème a amené la titulaire à proposer un mobile pouvant être contraint à se déplacer par rapport à son axe, de manière à éviter la rencontre avec un axe ou toute autre pièce du mouvement. La contrainte exercée sur le mobile consistera à déplacer l'axe dudit mobile, dont la partie centrale subira une déformation, la périphérie du mobile étant déplacée latéralement. Ainsi, la titulaire a développé un mobile présentant une certaine élasticité lui permettant de subir des déplacements sans changer un entre axe, sans altérer sa fonction, et sans changer son rapport d'engrènement.

Un tel mobile est décrit dans le brevet N°... (Demande N° 0385/03) au nom de la titulaire. Il comprend un moyeu tournant sur son axe, et une zone de transmission ou de roulement destinée à venir en contact avec un élément mobile ou fixe, une zone élastique susceptible de subir une déformation étant intercalée entre le moyeu et la zone de transmission. La zone élastique est une mousse déformable, ou est constituée par une succession de lamelles reliant le moyeu à la zone de transmission ou de roulement. Le but de la présente invention est de proposer un mobile semblable réalisé en une seule pièce.

Le mobile destiné à venir en contact avec un élément mobile ou fixe selon l'invention, est caractérisé en ce qu'il comprend un moyeu tournant sur un axe et une jante de transmission ou de roulement destinée à venir en contact avec l'élément mobile ou fixe, le moyeu et la jante de transmission ou de roulement étant reliés par des lames agencées pour permettre un déplacement relatif de la jante de transmission ou de roulement par rapport au moyeu sous l'action ressort des lames.

Les lames s'étendent de manière concentrique par rapport à la jante de transmission et de roulement, un jeu radial étant prévu entre le moyeu et la jante.

Les lames peuvent présenter en leur milieu une partie coudée permettant d'absorber la différence d'allongement desdites lames.

Le moyeu peut présenter des ouvertures placées en regard des parties coudées des lames, les ouvertures permettant aux lames de réaliser leur fonction ressort sans venir au contact du moyeu ou de la jante.

Le moyeu peut présenter des évidements dans lesquels viennent se positionner des plots solidaires de la jante de transmission ou de roulements.

Un jeu est habituellement prévu entre les évidements et les plots. Les lames et les plots sont régulièrement disposés sur le pourtour de la circonférence du mobile.

Dans un mode d'exécution préféré, le mobile présente trois lames ressort régulièrement disposées sur sa circonférence, et trois évidements sont agencés pour recevoir chacun un plot de la jante de transmission ou de roulements, les évidements étant régulièrement espacés sur la circonférence du mobile, chacun des plots étant intercalé entre deux lames du mobile. La jante de transmission ou de roulement est une roue dentée, une roue à étoile ou une roue lisse permettant un entraînement à friction.

Le mobile est de préférence réalisé en acier et soumis à un traitement au bisulfure de molybdène.

L'invention a également pour objet un procédé de fabrication du mobile caractérisé en ce qu'il est réalisé d'un seul tenant en une seule pièce sans discontinuité moléculaire, par usinage traditionnel, en partant d'une ébauche, par enlèvement de copeaux, par découpage au fil, par électroérosion en plongée, par électroformage, par découpe à l'étampe, ou par des techniques de micro moulage par illumination de résine sensible aux UV, par dépôts galvaniques dans des micro moules, ou encore par traitement galvanique sur un support.

Le dessin représente, à titre d'exemple, un mode d'exécution d'un mobile selon l'invention susceptible d'être décentré par rapport à son axe, et d'être mis en mouvement dans sa position décentrée.

Dans le dessin :
- la figure 1 est une vue de dessus du mobile, et
- la figure 2 est une vue en perspective du mobile de la figure 1.

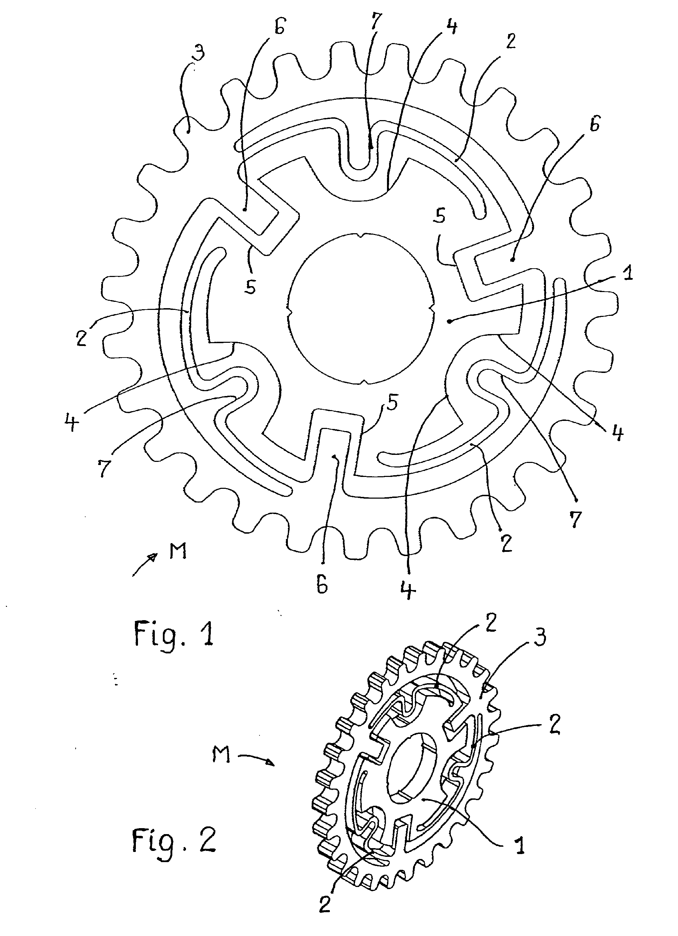

Le mobile décrit en regard des figures 1 et 2 a été développé pour l'industrie horlogère. Son application n'est cependant pas limitée à ce domaine particulier, et peut être étendue à la mécanique en général, en particulier à l'automobile, à l'aviation, à la micromécanique, à la machine-outil, à la médecine, et à tous les domaines de la technique dans lesquels un mobile doit être amené en contact avec un élément mécanique fixe ou un mobile, par une déformation de sa structure correspondant à un déplacement de son centre de rotation.

Le mobile représenté dans le mode d'exécution de la figure 1 et 2 permet, une fois mis en place, d'engrener avec un autre mobile ou toute autre sorte de transmission en étant décentré de son axe de rotation.

Le mobile M de la figure 1 comprend une partie centrale ou moyeu 1 reliée par l'intermédiaire de lames élastiques 2 à une jante de transmission ou de roulement 3. La jante de transmission 3 est munie, dans le mode d'exécution des figures 1 et 2, d'une denture permettant au mobile M d'engrener avec un autre mobile. Alternativement, la jante de transmission 3 peut être une jante lisse permettant d'obtenir un entraînement à friction ou une étoile réalisant la fonction d'un sautoir.

La partie centrale ou moyeu 1 présente des ouvertures 4 permettant aux lames 2 de se déformer librement, et des évidements 5 destinés à permettre l'appui de plots 6 faisant partie intégrante de la jante 3. Les plots 6 ont une fonction de guidage et relaient la transmission de la force exercée par la jante 3 afin d'assurer la transmission du mouvement, de limiter les déformations des lames 2, et ainsi d'éliminer les risques de casse.

Les lames 2 sont attachées à intervalles réguliers de part et d'autre du moyeu 1, respectivement de la jante 3. Elles présentent en leur milieu une partie coudée 7 destinée à absorber les différences d'allongement des lames 2. Les parties coudées 7 seront de préférence, légèrement plus épaisses que les parties droites des lames 2, ce qui permet de répartir les tensions et d'augmenter la résistance du mobile.

Comme représenté dans le dessin, le mobile présente trois lames 2 particulièrement espacées sur sa circonférence et la jante 3 présente trois plots 6 régulièrement espacés et placés entre les ouvertures 4. Un jeu est laissé entre les plots 6 et les évidements 5 de manière à laisser une certaine liberté de fonctionnement à l'ensemble, les plots 6 ne venant en contact de l'un ou de l'autre des bords latéraux des évidements 5 qu'après que l'action ressort des lames 2 se soit exercée. Les plots 6 sont ainsi utilisés pour limiter l'action ressort des parties centrales 7 des lames 2, et ainsi éviter la casse. Les parties droites des lames 2 sont destinées à absorber le décentrage de la jante 3 relativement au moyeu 1.

Le mobile M qui vient d'être décrit sera de préférence réalisé en nickel-phosphore ou en acier, et subira un traitement au bisulfure de molybdène. Les surfaces en contact lors du fonctionnement du mobile M, notamment les surfaces des évidements 5 et des plots 6 pourront glisser ainsi plus facilement l'une contre l'autre et l'usure prématurée du mobile sera ainsi limitée.

Avec le mobile qui vient d'être décrit, il est possible de contraindre la circonférence du mobile pour compenser une distance insuffisante entre deux axes sans altérer la fonction de transmission et le rapport de transmission de l'ensemble.

Cette solution permet également de compenser des problèmes moindres rencontrés en horlogerie, tels que les défauts de mal ronds des mobiles ou des problèmes d'arc-boutement entre les mobiles. Les défauts mineurs dus aux positionnements des trous de pivotement des différents mobiles peuvent aussi être facilement corrigés.

## Revendications

1. Mobile destiné à venir en contact avec un élément mobile ou fixe, **caractérisé en ce qu'**il comprend un moyeu (1) tournant sur son axe, et une jante de transmission ou de roulement (3) destinée à venir en contact avec l'élément mobile ou fixe, le moyeu (1) et la jante de transmission ou de roulement (3) étant reliés par des lames (2) agencées pour permettre un déplacement relatif de la jante par rapport au moyeu (1) sous l'action ressort des lames (2).

2. Mobile selon la revendication 1, **caractérisé en ce que** les lames (2) s'étendent de manière concentrique par rapport à la jante de transmission et de roulement (3), un jeu radial étant prévu entre le moyeu (1) et la jante (3).

3. Mobile selon la revendication 1, **caractérisé en ce que** les lames (2)présentent en leur milieu une partie coudée (7) permettent d'absorber la différence d'allongement desdites lames (2).

4. Mobile selon la revendication 3, **caractérisé en ce que** le moyeu (1) présente des ouvertures (4) placées en regard des parties coudées (7) des lames (2), les ouvertures (4) permettant aux lames de réaliser leur fonction ressort entre le moyeu (1) et la jante (3).

5. Mobile selon la revendication 1, **caractérisé en ce que** le moyeu (1) présente des évidements (5) dans lesquels viennent se positionner des plots (6) solidaires de la jante de transmission ou de roulement (3).

6. Mobile selon la revendication 5, **caractérisé en ce qu'**un jeu est prévu entre les évidements (5) et les plots (6).

7. Mobile selon la revendication 2 ou 5, **caractérisé en ce que** les lames (2) et les plots (6) sont régulièrement disposés sur le pourtour de la circonférence du mobile (M).

8. Mobile selon la revendication 1, **caractérisé en ce qu'**il présente trois lames ressort (2) régulièrement disposées sur sa circonférence.

9. Mobile selon la revendication 5, **caractérisé en ce que** trois évidements (5) recevant chacun un plot (6) de la jante de transmission ou de roulement (3) sont régulièrement espacés sur la circonférence du mobile.

10. Mobile selon les revendications 8 et 9, **caractérisé en ce que** chacun des plots (6) est intercalé entre deux lames (2).

11. Mobile selon la revendication 1, **caractérisé en ce que** la jante de transmission ou de roulement (3) est une roue dentée, une roue à étoile ou une roue lisse permettant un entraînement à friction.

12. Mobile selon la revendication 1 **caractérisé en ce qu'**il est réalisé en acier.

13. Mobile selon la revendication 1 **caractérisé en ce qu'**il est soumis à un traitement au bisulfure de molybdène.

14. Mobile selon la revendication 1 **caractérisé en ce qu'**il est réalisé en une seule pièce.

15. Procédé de fabrication du mobile selon la revendication 1, **caractérisé en ce qu'**il est réalisé d'un seul tenant en une seule pièce sans discontinuité moléculaire, par usinage traditionnel en partant d'une ébauche, par enlèvement de copeaux, par découpage au fil, par électroérosion à fil, par électroformage, par électroérosion en plongée, par découpage à l'étampe, ou par des techniques de micro moulage par illumination de résine sensible aux UV, par dépôts galvaniques dans des micros moules, ou encore par traitement galvanique sur un support.
